# EUROPÄISCHE PATENTANMELDUNG

(11) **EP 2 781 421 A2**
(43) Veröffentlichungstag der Anmeldung: **24.09.2014**
(21) Anmeldenummer: 14154582.2
(22) Anmeldetag: 11.02.2014
(51) Int. Cl.: B60W 30/18, B60W 30/08, G01S 15/93, G01S 15/87

(54) **Störungsunterdrückung bei Tote-Winkel-Überwachung**

(30) Priorität: 22.03.2013 DE 102013205167
(71) Anmelder: ROBERT BOSCH GMBH, 70442 Stuttgart (DE)
(72) Erfinder: Schoenherr, Michael, 71272 Renningen-Malmsheim (DE)

(57) **Zusammenfassung**

Vorrichtung (10) mit zumindest einem ersten Ultraschall-Sensor (SVA-Ultraschall-Sensor) (21, 22, 23, 24) eines Tote-Winkel-Überwachungssystems (20) zur Erfassung eines Objektes (2, 3), insbesondere eines sich nähernden Fahrzeuges (2, 3), in einem toten Winkel (α), mit einer Steuereinheit (40) zum Bestimmen des Abstandes und/oder der Geschwindigkeit und/oder der Position des bewegten Objektes (2, 3). Erfindungsgemäß ist dabei vorgesehen, dass die Steuereinheit (40) derart ausgebildet ist, dass zumindest ein Signal eines zweiten Ultraschall-Sensors (PP-Ultraschall-Sensors) (31, 32, 33, 34) eines Fahrassistenzsystems (30) zum Überwachen des toten Winkels (α) durch diese verarbeitbar ist.

## Beschreibung

Die vorliegende Erfindung betrifft eine Vorrichtung nach dem Oberbegriff von Anspruch 1 sowie ein Verfahren nach Anspruch 7 zur Erfassung eines Objektes, insbesondere eines sich nähernden Fahrzeuges, in einem Toten-Winkel. Des Weiteren betrifft die Erfindung ein Fahrzeug nach Anspruch 10 mit der genannten Vorrichtung, die nach dem erfindungsgemäßen Verfahren betrieben werden kann.

### STAND DER TECHNIK

In der modernen Fahrzeugtechnik werden immer mehr Assistenzsysteme eingesetzt. Dabei sind insbesondere Tote-Winkel-Überwachungssysteme (SVAside view assist) bereits bekannt. Diese Tote-Winkel-Überwachungssysteme sind in der Lage, den Fahrer eines Fahrzeuges beim Spurwechsel oder beim Rückwärtsausparken zu unterstützen. Hierzu können diese Systeme sich nähernde Fahrzeuge und/oder Hindernisse in einem Toten-Winkel-Bereich erkennen. Der Fahrer eines mit einem derartigen Tote-Winkel-Überwachungssystem ausgestatteten Fahrzeuges wird dabei gewarnt, wenn ein Objekt im Toten-Winke-Bereich detektiert ist. Tote-Winkel-Überwachungssysteme weisen dabei Sensorsysteme zum Erkennen von Fremdfahrzeugen auf einer Nebenspur und Hindernissen im Toten-Winkel, die üblicherweise mit Ultraschall-Sensoren ausgestattet sind.

Ein derartiges System ist beispielsweise aus der DE 10 2006 037 591 A1 bekannt, welches vier Ultraschall-Sensoren (sogenannte SVA-Ultraschall-Sensoren, SVA steht für "Side View Assist") zur Erfassung eines bewegten Objektes in einem Toten-Winkel aufweist, die seitlich am Fahrzeug angeordnet sind. Die Ultraschall-Sensoren dienen dabei als Sende- und Empfangseinheiten. Diese sogenannten SVA- Ultraschall-Sensoren senden ein Abfragesignal aus, um den Toten-Winkel nach Objekten zu untersuchen. Wenn ein Objekt sich im Toten-Winkel befindet, wird das Abfragesignal vom Objekt reflektiert und zumindest teilweise an denselben Sensor zurückgesandt. Dabei kann es jedoch zu Fehl- und Falschwarnungen kommen, wenn ein Fahrzeug mit einem Tote-Winkel-Überwachungssystem ein anderes Fahrzeug überholt, das ebenfalls mit einem Tote-Winkel-Überwachungssystem ausgestattet ist. Die Ursache der Falschwarnung liegt dabei darin, dass die SVA-Ultraschall-Sensoren nicht unterscheiden können, ob es sich bei der Detektion um die Reflexion des eigenen Sendepulses vom Abfragesignal handelt oder um ein Signal einer anderen Ultraschallquelle. Dieses geschieht insbesondere, da die Abfragesignale von den jeweiligen Fahrzeugen üblicherweise nicht kodiert werden und sich somit von einander nicht unterscheiden lassen.

### OFFENBARUNG DER ERFINDUNG

Es ist daher die Aufgabe der vorliegenden Erfindung, die oben genannten Nachteile zu überwinden und eine Vorrichtung, sowie ein Verfahren bereitzustellen, die es ermöglichen, herannahende Fahrzeuge und stehende Objekte im Toten-Winkel sicher zu erkennen und Fehl- und/oder Falschwarnungen zuverlässiger zu vermeiden.

Die erfindungsgemäße Aufgabe wird durch eine Vorrichtung mit den Merkmalen des unabhängigen Anspruchs 1, durch ein Verfahren mit den Merkmalen des unabhängigen Anspruchs 7 und ein erfindungsgemäßes Fahrzeug gemäß Anspruch 10 gelöst. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Verfahren sowie im Zusammenhang mit dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Die erfindungsgemäße Aufgabe wird durch eine Vorrichtung gelöst, die zumindest einen ersten Ultraschall-Sensor eines Tote-Winkel-Überwachungssystems (SVA-Ultraschall Sensor) zur Erfassung eines Objektes, insbesondere eines sich nähernden Fahrzeuges, in einem Toten-Winkel und eine Steuereinheit zum Bestimmen des Abstandes und/oder der Geschwindigkeit und/oder der Position des Objektes aufweist. Hierbei ist erfindungsgemäß vorgesehen, dass die Steuereinheit derart ausgebildet ist, dass zumindest ein Signal eines zweiten Ultraschall-Sensors, der nicht Teil des Tote-Winkel-Überwachungssystems ist, sondern Teil eines zusätzlich am Fahrzeug vorgesehenen Sensorsystems ist, wie beispielsweise einem Einparkhilfesystem (sogenannter Park Pilot-Ultraschallsensor, im folgenden auch als PP-Ultraschall-Sensor bezeichnet). Die Erfindung geht dabei von dem Gedanken aus, dass neben den ersten (SVA-) Ultraschall-Sensoren des eigentlichen Tote-Winkel-Überwachungssystems zusätzlich zumindest ein weiterer, zweiter (PP-) Ultraschall-Sensor des Fahrassistenzsystems nach einer Detektion im Toten-Winkel im und vom selben Fahrzeug abgefragt werden kann. Die zusätzliche Abfrage zumindest eines weiteren, zweiten (PP-)Ultraschall-Sensors im eigenen Fahrzeug kann vorteilhafterweise dazu dienen, zu überprüfen, ob es sich beim durch den ersten Ultraschall-Sensor empfangenen Signal um die Reflexion des eigenen Signals handelt oder ein Signal einer anderen, fremden Ultraschallquelle. In einer vorteilhaften Ausgestaltung der Erfindung können mehrere zweite Ultraschall-Sensoren abgefragt werden. Die erfindungsgemäße Vorrichtung kann dann aktiviert werden, wenn der Fahrer beispielsweise durch Setzen des Blinkers oder durch Lenken des Fahrzeugs zu erkennen gibt, dass ein Spurwechsel beabsichtigt ist. Dabei können die zweiten Ultraschall-Sensoren im energiesparsamen Hör- bzw. Empfangbetrieb eingeschaltet werden. Die Ultraschallsignale werden durch die zusätzlichen, zweiten Ultraschall-Sensoren des Fahrassistenzsystems nicht ausgesendet, aber empfangen. Dabei können die zusätzlichen, zweiten Ultraschall-Sensoren des Fahrassistenzsystems ein Bestandteil der erfindungsgemäßen Vorrichtung sein. Alternativ kann die Steuereinheit dazu ausgebildet sein, Signale von Sensoren weiterer Systeme im eigenen Fahrzeug zu empfangen und/oder zu analysieren. Vorteilhafterweise ermöglicht die Abfrage mindestens eines weiteren, zweiten Ultraschall-Sensors festzustellen, ob es sich bei einer Detektion tatsächlich um ein Objekt im Toten-Winkel handelt, um eine Falschwarnung zu vermeiden.

Im Rahmen der Erfindung kann die Vorrichtung ein Tote-Winkel-Überwachungssystem mit zumindest einem ersten Ultraschall-Sensor (SVA-Ultraschall-Sensor) und ein Fahrassistenzsystem mit zumindest einem zweiten Ultraschall-Sensor (PP-Ultraschall-Sensor) aufweisen. Dabei ist es vorteilhaft, dass die erfindungsgemäße Vorrichtung die Funktionen beider Systeme umfassen und steuern kann. Zudem kann die Vorrichtung die zweiten Ultraschall-Sensoren des Fahrassistenzsystems je nach Bedarf und Möglichkeit zum assistierten Fahren bzw. Einparken oder zum Beobachten des Toten-Winkels verwenden. Dabei ist es besonders vorteilhaft, dass die beiden Funktionen mit bereits vorhandenen PP-Ultraschall-Sensoren des Fahrzeuges realisiert werden können. Somit kann auf zusätzliche Sensoren verzichtet werden. Zum Überwachen des Toten-Winkels werden die zweiten Ultraschall-Sensoren nur beim Fahren ab einer bestimmten Mindestgeschwindigkeit gebraucht. Zum assistierten Einparken werden die PP-Ultraschall-Sensoren dagegen beim Unterschreiten einer kleineren Geschwindigkeit als die Mindestgeschwindigkeit eingeschaltet. Deswegen werden die zweiten Ultraschall-Sensoren nicht gleichzeitig für beide Funktionen gebraucht. Somit können nicht nur Sensoren, sondern auch Bauraum und Kosten beim Montieren beider Systeme reduziert werden. Außerdem kann die Funktionalität des Tote-Winkel-Überwachungssystems durch Verwenden von PP-Ultraschall-Sensoren erheblich verbessert werden.

Des Weiteren kann es im Rahmen der Erfindung vorgesehen sein, dass das Tote-Winkel-Überwachungssystem vier erste (SVA-)Ultraschall-Sensoren aufweist. Ferner kann das Fahrassistenzsystem auch vier zweite (PP-) Ultraschall-Sensoren aufweisen. Die vier ersten Ultraschall-Sensoren können jeweils an äußeren Ecken des Fahrzeuges seitlich an oder hinter der Fahrzeugkarosserie angeordnet sein. Die vier zweiten Ultraschall-Sensoren können beispielsweise vorne und/oder hinten am Fahrzeug, bevorzugt in einer Reihe, besonders bevorzugt zwischen jeweils zwei seitlichen SVA-Ultraschall-Sensoren angebracht sein.

Die erfindungsgemäßen ersten Ultraschall-Sensoren des Tote-Winkel-Überwachungssystems können einen sich seitlich bezüglich des Kraftfahrzeuges erstreckenden Erfassungsbereich aufweisen. Beispielsweise können die ersten Ultraschall-Sensoren einen Erfassungsbereich aufweisen, der um 45° zur Fahrzeuglängsrichtung ausgerichtet ist und sich kegelartig ausbreitet. Des Weiteren können die zweiten Ultraschall-Sensoren des Fahrassistenzsystems einen sich hinter und/oder vor dem Kraftfahrzeug erstreckenden Erfassungsbereich aufweisen. Vorteilhafterweise können die zweiten Ultraschall-Sensoren und jeweils zwei benachbarte ersten (SVA-) Ultraschall-Sensoren einen sich zumindest zum Teil überlappenden Erfassungsbereich aufweisen, sodass die zweiten Ultraschall-Sensoren auch zum Überwachen des Toten-Winkels eingesetzt werden können. Somit können die zweiten Ultraschall-Sensoren dazu dienen, ein Signal eines benachbarten ersten Ultraschall-Sensors zu überprüfen und zu plausibilisieren.

Bei einer besonders vorteilhaften Ausführung der Erfindung kann die Steuereinheit über eine Datenverbindung mit dem Tote-Winkel-Überwachungssystem und/oder dem Fahrassistenzsystem verbunden sein. Auch ist es denkbar, wenn die Steuereinheit direkt mit den ersten und/oder zweiten Ultraschall-Sensoren kommunizieren kann. Hierzu können standardisierten Datenleitungen wie LIN-/CAN-BUS verwendet werden. Alternativ kann die Datenverbindung drahtlos mittels elektromagnetischer Welle oder über Funk erfolgen. Die erfindungsgemäße Steuereinheit kann als eine gemeinsame Steuereinheit für beide Systeme ausgebildet sein oder für jedes System ein speziell ausgebildetes Steuergerät umfassen, das mit dem anderen Steuergerät kommunizieren kann. Hierbei kann es vorteilhaft sein, dass die Steuereinheit die Ansteuerung der zweiten Ultraschall-Sensoren nur zum toten Winkel übernehmen kann. Hierzu kann die erfindungsgemäße Steuereinheit direkt mit den zweiten Ultraschall-Sensoren oder mit dem Fahrassistenzsystem kommunizieren.

Vorteilhafterweise kann die erfindungsgemäße Vorrichtung Mittel zur Erzeugung eines optischen und/oder akustischen Warnsignals aufweisen. Wenn ein Objekt im toten Winkel registriert worden ist, können die Mittel ein akustisches Signal erzeugen oder eine optische Anzeige auf dem Armaturenbrett oder im jeweiligen Außenspiegel einschalten. Zudem kann es vorgesehen sein, dass die Vorrichtung die herannahende Gefahr einstufen kann und je nach der Position und/oder Geschwindigkeit des detektierten Objektes das Warnsignal anpassen. Dabei kann variable Lautstärke des akustischen Signals oder veränderliche farbliche Anzeige erzeugt werden.

Des Weiteren wird die erfindungsgemäße Aufgabe durch ein Verfahren zur Erfassung eines Objektes, insbesondere eines sich näherndes Fahrzeuges in einem toten Winkel, mit Hilfe eines Tote-Winkel-Überwachungssystems mit zumindest einem ersten (SVA-) Ultraschall-Sensor und eines Fahrassistenzsystems mit einer Mehrzahl von zweiten (PP-) Ultraschall-Sensoren gelöst. Gemäß der Erfindung umfasst das Verfahren folgende Schritte:
a) Aussenden eines Abfragesignals mittels des ersten Ultraschall-Sensors des Tote-Winkel-Überwachungssystems,
b) Empfangen eines Antwortsignals mittels des ersten Ultraschall-Sensors,
c) Abfragen der zweiten Ultraschall-Sensoren des Fahrassistenzsystems,
d) Verifizieren des Antwortsignals als ein Fremd-Ultraschallsignal, wenn alle zweiten Ultraschall-Sensoren des Fahrassistenzsystems ein Antwortsignal empfangen,
e) Verifizieren des Antwortsignals als ein Objekt im toten Winkel, wenn nur einer der zweiten Ultraschall-Sensoren des Fahrassistenzsystems ein Antwortsignal empfängt.

Vorteilhafterweise ermöglicht das erfindungsgemäße Verfahren eine sichere Erkennung eines Fremd-Ultraschallsignals sowie eine Reflektion des Ultraschallsignals eines der ersten Ultraschall-Sensoren aus einem eigenen Tote-Winkel-Überwachungssystem. Der Erfindungsgedanke liegt dabei darin, dass ein Fremd-Ultraschallsignal in allen hinteren zweiten Ultraschall-Sensoren des Fahrassistenzsystems ein Signal erzeugt. Im Gegensatz dazu erzeugt eine Reflektion eines eigenen Ultraschallsignals ein Signal lediglich in dem aussendenden ersten Ultraschall-Sensor und dem benachbarten zweiten Ultraschall-Sensor, aber nicht in allen weiteren zweiten Ultraschall-Sensoren. Eigene erste Ultraschall-Sensoren sind vorteilhafterweise dazu ausgelegt, einen bestimmten Erfassungsbereich seitlich vom und hinter dem Fahrzeug abzutasten. Ein reflektiertes Ultraschallsignal wird dann wieder in Richtung zum aussendenden ersten Ultraschall-Sensor reflektiert, wobei eine Detektion nur noch in einem benachbarten zweiten Ultraschall-Sensor möglich ist. Aus diesem Grund lässt die Erfindung sicher erkennen, wann eine Detektion im jeweiligen ersten Ultraschall-Sensor tatsächlich auf ein Objekt im Toten-Winkel schließen lässt. Dadurch können die störenden Falschwarnungen nahezu ausgeschlossen werden.

Um das Verfahren einzuleiten, kann der Schritt a) oder c) zuerst ausgeführt werden. Wenn das Verfahren mit dem Schritt a) anfängt, kann zunächst ein Abfragesignal durch den ersten Ultraschall-Sensor gesendet werden. Gleichzeit können die zweiten Ultraschall-Sensoren eingeschaltet werden. Alternativ können die zweiten Ultraschall-Sensoren eingeschaltet werden, wenn der aussendende erste Ultraschall-Sensor ein Antwortsignal empfängt. Wenn das Verfahren mit dem Schritt c) anfängt, können zunächst die zweiten Ultraschall-Sensoren eingeschaltet werden, wobei die ersten Ultraschall-Sensoren gleichzeitig oder erst dann eingeschaltet werden können, wenn die zweiten Ultraschall-Sensoren ein Signal detektieren. Vorteilhafterweise können die erfindungsgemäßen Schritte gleichzeitig, nacheinander oder in beliebiger Reihenfolge ausgeführt werden.

Erfindungsgemäß kann vorgesehen sein, dass die zweiten Ultraschall-Sensoren des Fahrassistenzsystems und/oder die ersten Ultraschall-Sensoren des Tote-Winkel-Überwachungssystems ab einer bestimmten Fahrzeuggeschwindigkeit eingeschaltet werden, beispielsweise 18 km/h. Die PP-Ultraschall-Sensoren des Fahrassistenzsystems können dabei im Empfangsmodus eingeschaltet werden. Dadurch kann Energie zum Betreiben der erfindungsgemäßen Vorrichtung gespart werden.

Ein weiterer besonderer Vorteil der Erfindung besteht darin, dass aufgrund des Laufzeitunterschieds des Antwortsignals zu einem ersten Ultraschall-Sensor und zu einem benachbarten zweiten Ultraschall-Sensor des Fahrassistenzsystems die Position des sensierten Objekts ermittelt werden kann. Die Verwendung von mehreren ersten und/oder zweiten Ultraschall-Sensoren ermöglich eine Winkelauflösung und kann neben dem Abstand zum Objekt vorteilhafterweise auch deren Position ermitteln. Vorteilhafterweise können die erfindungsgemäßen Schritte wiederholt werden. Die Aussendung von mehreren Abfragesignalen nacheinander kann dazu dienen, die Geschwindigkeit des herannahenden Objekts zu bestimmen. Folglich kann das erfindungsgemäße Verfahren die Gefahr bei einem Überholvorgang sehr präzise ermitteln und die Falschwarnungen unterdrücken.

Vorteilhafterweise kann die erfindungsgemäße Aufgabe durch ein Kraftfahrzeug gelöst werden, das mit einer erfindungsgemäßen Vorrichtung ausgestattet ist, die durch ein erfindungsgemäßes Verfahren betrieben werden kann. Eine besonders vorteilhafte Ausführungsform der vorliegenden Erfindung ergibt sich dann, wenn die erfindungsgemäße Vorrichtung mit einem Tote-Winkel-Überwachungssystem, welches zumindest einen ersten Ultraschall-Sensor aufweist, und einem Fahrassistenzsystem, welches zumindest einen zweiten Ultraschall-Sensor aufweist, als integraler Bestandteil des Kraftfahrzeuges oder eines Bauelementes des Kraftfahrzeuges ausgeführt ist. Zudem kann erfindungsgemäß vorgesehen sein, dass die erfindungsgemäße Vorrichtung als ein Modul ausgebildet ist, welches an verschiedenen Fahrzeugmodellen eingebaut werden kann. Alternativ kann die erfindungsgemäße Vorrichtung nur ein Tote-Winkel-Überwachungssystem umfassen, jedoch dazu ausgelegt sein, mit weiteren eigenen Fahrassistenzsystemen zu kommunizieren, sodass vorhandene Fahrassistenzsystemen verwendet werden können.

Erfindungsgemäß können die Merkmale der Beschreibung und der Ansprüche der erfindungsgemäßen Vorrichtung, des erfindungsgemäßen Verfahrens sowie des erfindungsgemäßen Fahrzeugs sowohl einzeln für sich als auch in den verschiedensten Kombinationen erfindungswesentlich sein.

### BEVORZUGTE AUSFÜHRUNGSBEISPIELE

Weitere, die Erfindung verbessernde Maßnahmen werden nachstehend gemeinsam mit der Beschreibung der bevorzugten Ausführungsbeispiele der Erfindung anhand der Figuren näher dargestellt. Es zeigen jeweils schematisch:
- Fig. 1: ein erfindungsgemäßes Fahrzeug,
- Fig. 2: ein herkömmliches Fahrzeug vor dem Wechseln der Spur nach links, und
- Fig. 3: das erfindungsgemäße Fahrzeug vor dem Wechseln der Spur nach rechts.

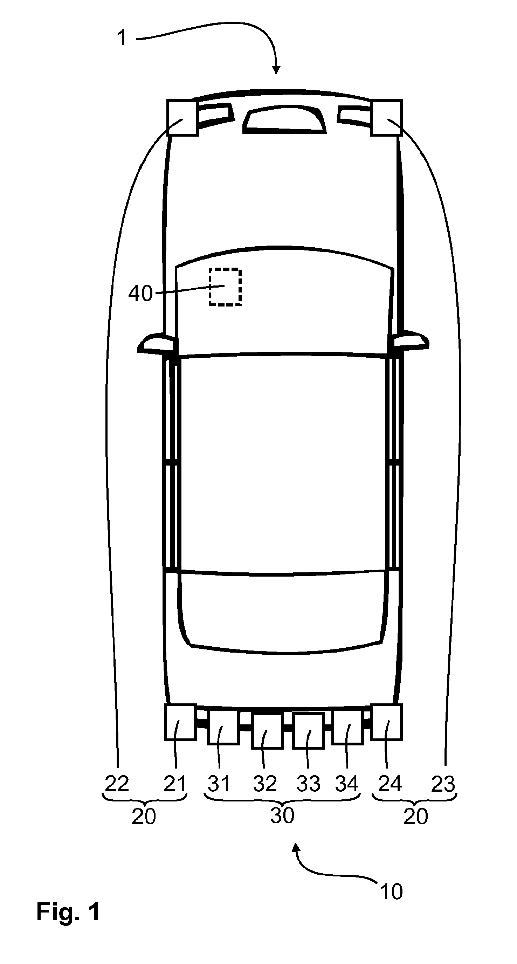

Elemente mit gleicher Funktion und Wirkungsweise sind in den Fig. 1, 2 und 3 jeweils mit denselben Bezugszeichen versehen.

In der Figur 1 ist ein erfindungsgemäßes Fahrzeug 1 abgebildet, welches über ein Tote-Winkel-Überwachungssystem 20 mit vier SVA-Ultraschall-Sensoren 21, 22, 23, 24 als erste Ultraschall-Sensoren und ein Fahrassistenzsystem 30 mit weiteren vier PP-Ultraschall-Sensoren 31, 32, 33, 34 als zweite Ultraschall-Sensoren verfügt. Die vier SVA-Ultraschall-Sensoren 21, 22, 23, 24 sind seitlich am Fahrzeug 1 angeordnet. Dabei sind zwei SVA-Ultraschall-Sensoren 21, 24 am Heck des Fahrzeugs 1 und zwei SVA-Ultraschall-Sensoren 22, 23 vorne am Fahrzeug 1 vorgesehen. Die vier PP-Ultraschall-Sensoren 31, 32, 33, 34 sind im dargestellten Ausführungsbeispiel der Erfindung hinten am Heck des Fahrzeugs angeordnet. Die PP-Ultraschall-Sensoren 31, 32, 33, 34 sind in einer Reihe zwischen zwei hinteren SVA-Ultraschall-Sensoren 21, 24 angebracht.

Die SVA-Ultraschall-Sensoren 21, 22, 23, 24 des Tote-Winkel-Überwachungssystems 20 weisen dabei einen sich seitlich bezüglich des Kraftfahrzeuges erstreckenden Erfassungsbereich auf, wobei die PP-Ultraschall-Sensoren 31, 32, 33, 34 des Fahrassistenzsystems 30 einen sich im Wesentlichen hinter dem Kraftfahrzeug 1 erstreckenden Erfassungsbereich aufweisen. Die erfindungsgemäßen Sensoren 21 bis 24 und 31 bis 34 stehen mit einer schematisch dargestellten Steuereinheit 40 in Datenverbindung. Dabei kann die Datenverbindung zwischen der Steuereinheit 40 und dem Tote-Winkel-Überwachungssystem 20 sowie dem Fahrassistenzsystem 30 über einen standardisierten Datenbus erfolgen. Die Steuereinheit 40 kann erfindungsgemäß zur Ansteuerung beider Systeme 20, 30 dienen. Alternativ kann die Steuereinheit 40 nur zur Ansteuerung des Tote-Winkel-Überwachungssystems 20 und zur Kommunikation mit dem Fahrassistenzsystem 30 ausgelegt sein.

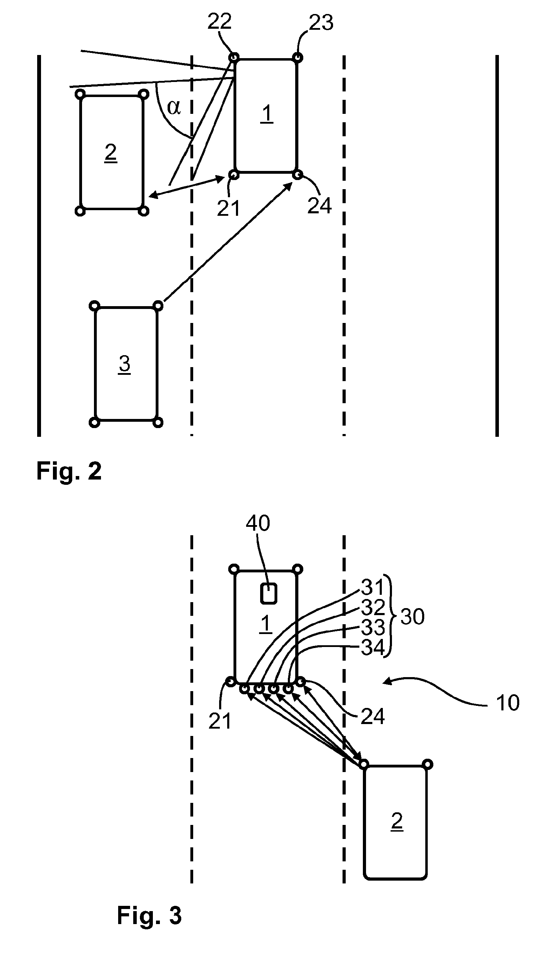

Die Figur 2 zeigt ein herkömmliches Fahrzeug 1 kurz vor einem Überholvorgang mit einem bekannten Tote-Winkel-Überwachungssystem, welches nur vier SVA-Ultraschall-Sensoren 21, 22, 23, 24 seitlich am Fahrzeug 1 aufweist. Die SVA-Ultraschall-Sensoren 21, 22, 23, 24 dienen dabei als Sende- und Empfangseinheiten. Sie senden ein Abfragesignal aus, um einen toten Winkel α nach herannahenden Fahrzeugen 2, 3 abzutasten und dem Fahrer das bevorstehende Überholmanöver zu erleichtern. Wenn sich ein Fremdfahrzeug 2 im toten Winkel links vor dem Fahrzeug 1 befindet, wird ein Abfragesignal vom Fremdfahrzeug 2 reflektiert und an denselben SVA-Ultraschall-Sensor 21 zurückgesandt. Es kann jedoch zu einer Falschwarnung auf der rechten Seite am SVA-Ultraschall-Sensor 24 kommen, wenn ein weiteres Fremdfahrzeug 3 in der Nähe aber nicht im toten Winkel ist, das ebenfalls mit einem Tote-Winkel-Überwachungssystem ausgestattet ist. Dies geschieht, weil die SVA-Ultraschall-Sensoren 21, 22, 23, 24 nicht unterscheiden können, ob es sich bei der Detektion um die Reflexion des eigenen Abfragesignals handelt oder um ein Signal einer anderen Ultraschallquelle, da die Abfragesignale sich in der Regel voneinander nicht unterscheiden.

Die Figur 3 zeigt eine schematische Darstellung einer erfindungsgemäßen Vorrichtung 10, die die anhand der Figur 2 gezeigten Nachteile überwindet. Die Erfindung sieht dabei vor, dass die Steuereinheit 40 derart ausgebildet ist, dass sie nicht nur mit den SVA-Ultraschall-Sensoren 21, 22, 23, 24 als erste Ultraschallsensoren sondern mit vier weiteren PP-Ultraschall-Sensoren 31, 32, 33, 34 als zweite Ultraschallsensoren kommunizieren kann. Der Erfindungsgedanke liegt dabei darin, dass vorhandene PP-Ultraschall-Sensoren 31, 32, 33, 34 ebenfalls zum Überwachen des toten Winkels a herangezogen werden können. Die zusätzliche Abfrage der PP-Ultraschall-Sensoren 31, 32, 33, 34 dient zum Überprüfen, ob es sich beim durch einen SVA-Ultraschall-Sensor 24 empfangenen Signal um die Reflexion des eigenen Ultraschallsignals handelt oder ein Signal von einem anderen Fremdfahrzeug 2 mit einem Ultraschallsensor. Dabei können die PP-Ultraschall-Sensoren 31, 32, 33, 34 im energiesparsamen Hörbetrieb ab einer bestimmten Geschwindigkeit eingeschaltet werden. Die erfindungsgemäße Vorrichtung 10 kann ferner eingeschaltet werden, wenn der Fahrer beispielsweise durch Setzen des Blinkers oder durch Lenken des Fahrzeugs dazu schließen lässt, dass ein Spurwechsel beabsichtigt ist.

Dabei können die zusätzlichen, zweiten PP-Ultraschall-Sensoren 31, 32, 33, 34 des Fahrassistenzsystems 30 ein Bestandteil der erfindungsgemäßen Vorrichtung 10 sein. Ferner ist es denkbar, dass das Tote-Winkel-Überwachungssystem 20 mit den SVA-Ultraschall-Sensoren 21, 22, 23, 24 und das Fahrassistenzsystem 30 mit den PP-Ultraschall-Sensoren 31, 32, 33, 34 ein Bestandteil der erfindungsgemäßen Vorrichtung 10 sind. Alternativ kann die Steuereinheit 40 nur die SVA-Ultraschall-Sensoren 21, 22, 23, 24 des Tote-Winkel-Überwachungssystems 20 umfassen und zudem derart ausgebildet sein, Signale von PP-Ultraschall-Sensoren 31, 32, 33, 34 weiterer eigener Fahrassistenzsysteme 30 zu empfangen.

Die Vorrichtung 10 kann vorteilhafterweise die Funktionen beider Systeme 20, 30 steuern. Dabei kann die Vorrichtung 10 die PP-Ultraschall-Sensoren 31, 32, 33, 34 des Fahrassistenzsystems 30 nur nach Bedarf zum Überwachen des toten Winkels α verwenden. Die Funktionen der beiden Systeme 20, 30 kollidieren dabei nicht, da zum Überwachen des Toten-Winkels α die PP-Ultraschall-Sensoren 31, 32, 33, 34 nur in Situationen gebraucht werden, wenn kein assistiertes Einparken gefragt ist, sodass dieselben PP-Ultraschall-Sensoren 31, 32, 33, 34 für beide Systeme 20, 30 eingesetzt werden können.

Das erfindungsgemäße Verfahren gemäß Figur 3 kann mit Aussenden eines Abfragesignals des SVA-Ultraschall-Sensors 24 gestartet werden. Wenn es sich um Reflektion des eigenen Abfragesignals handelt, empfängt derselbe SVA-Ultraschall-Sensor 24 und nur der benachbarte PP-Ultraschall-Sensor 34 ein Antwortsignal. Im Falle, wenn alle hinteren PP-Ultraschall-Sensoren 31, 32, 33, 34 ein Antwortsignal empfangen, kann ein Fremd-Ultraschall verifiziert und eine Falschwarnung unterdrückt werden. Somit kann eine sichere Erkennung eines Fremd-Ultraschallsignals gewährleistet werden. Dadurch können störende Falschwarnungen vermieden werden.

Gemäß einer vorteilhaften Ausführungsform des erfindungsgemäßen Verfahrens können die PP-Ultraschall-Sensoren 31, 32, 33, 34 dann eingeschaltet werden, wenn der aussendende SVA-Ultraschall-Sensor 24 ein Antwortsignal empfängt. Alternativ können zunächst die PP-Ultraschall-Sensoren 31, 32, 33, 34 abgefragt werden, wobei die SVA-Ultraschall-Sensoren 21, 22, 23, 24 gleichzeitig oder erst dann eingeschaltet werden können, wenn die PP-Ultraschall-Sensoren 31, 32, 33, 34 ein Signal empfangen. Es sind verschiedene Varianten der Erfindung denkbar, wobei die erfindungsgemäßen Verfahrensschritte gleichzeitig oder in unterschiedlicher Reihenfolge gestartet werden können.

Beim Verwenden von mehreren Ultraschall-Sensoren 21 bis 24 und 31 bis 34 kann eine Winkelauflösung durchgeführt werden, sodass nicht nur der Abstand zum Fremdfahrzeug und seine Geschwindigkeit sondern auch seine Position ermittelt werden können. Das erfindungsgemäße Verfahren ermöglicht daher, die Gefahr bei einem Überholvorgang sehr präzise zu ermitteln und die Falschwarnungen zu unterdrücken.

Sämtliche aus den Ansprüchen, der Beschreibung oder den Zeichnungen hervorgehenden Merkmale und/oder Vorteile, einschließlich konstruktiver Einzelheiten und räumlicher Anordnungen, können sowohl für sich alleine als auch in den verschiedensten Kombinationen, insbesondere basierend auf Figuren 1 bis 3, erfindungswesentlich sein.

## Patentansprüche

1. Vorrichtung (10) mit zumindest einem ersten Ultraschall-Sensor (21, 22, 23, 24) eines Tote-Winkel-Überwachungssystems (20) zur Erfassung eines Objektes (2, 3), insbesondere eines sich näherndes Fahrzeuges (2, 3), in einem toten Winkel (α), mit
einer Steuereinheit (40) zum Bestimmen des Abstandes und/oder der Geschwindigkeit und/oder der Position des bewegten Objektes (2, 3),
**dadurch gekennzeichnet,**
**dass** die Steuereinheit (40) derart ausgebildet ist, dass zumindest ein Signal eines zweiten Ultraschall-Sensors (31, 32, 33, 34) eines Fahrassistenzsystems (30) zum Überwachen des toten Winkels (α) durch diese verarbeitbar ist.

2. Vorrichtung (10), insbesondere nach dem Oberbegriff von Anspruch 1, mit einem Tote-Winkel-Überwachungssystem (20), welches zumindest einen ersten Ultraschall-Sensor (21, 22, 23, 24) aufweist,
und einem Fahrassistenzsystem (30), welches zumindest einen zweiten Ultraschall-Sensor (31, 32, 33, 34) aufweist.

3. Vorrichtung (10) nach Anspruch 1 oder 2,
**dadurch gekennzeichnet,**
**dass** das Tote-Winkel-Überwachungssystem (20) vier ersten Ultraschall-Sensoren (21, 22, 23, 24) aufweist, und dass insbesondere das Fahrassistenzsystem (30) vier zweite Ultraschall-Sensoren (31, 32, 33, 34) aufweist.

4. Vorrichtung (10) nach einem der vorhergehenden Ansprüche,
**dadurch gekennzeichnet,**
**dass** der und/oder die zweiten Ultraschall-Sensor(-en) (31, 32, 33, 34) des Fahrassistenzsystems (30) zwischen zumindest zwei ersten Ultraschall-Sensoren (21, 22, 23, 24) des Tote-Winkel-Überwachungssystems (20) an einem Fahrzeug (1) anordbar sind.

5. Vorrichtung (10) nach einem der vorhergehenden Ansprüche,
**dadurch gekennzeichnet,**
**dass** die ersten Ultraschall-Sensoren (21, 22, 23, 24) des Tote-Winkel-Überwachungssystems (20) einen sich seitlich bezüglich des Kraftfahrzeuges erstreckenden Erfassungsbereich aufweisen, und dass insbesondere die zweiten Ultraschall-Sensoren (31, 32, 33, 34) des Fahrassistenzsystems (30) einen sich hinter und/oder vor dem Kraftfahrzeug erstreckenden Erfassungsbereich aufweisen.

6. Vorrichtung (10) nach einem der vorhergehenden Ansprüche,
**dadurch gekennzeichnet,**
**dass** die Steuereinheit (40) über eine Datenverbindung mit dem Tote-Winkel-Überwachungssystem (20), insbesondere mit den ersten Ultraschall-Sensoren (21, 22, 23, 24) und/oder dem Fahrassistenzsystem (30), insbesondere mit den zweiten Ultraschall-Sensoren (31, 32, 33, 34) verbunden ist.

7. Verfahren zur Erfassung eines Objektes (2, 3), insbesondere eines sich näherndes Fahrzeuges (2, 3), in einem toten Winkel (α), mit Hilfe eines Tote-Winkel-Überwachungssystems (20) mit zumindest einem ersten Ultraschall-Sensor (21, 22, 23, 24), und
eines Fahrassistenzsystems (30) mit zumindest zwei zweiten Ultraschall-Sensoren (31, 32, 33, 34),
umfassend folgende Schritte:
a) Aussenden eines Abfragesignals mittels des ersten Ultraschall-Sensors (21, 22, 23, 24) des Tote-Winkel-Überwachungssystems (20),
b) Empfangen eines Antwortsignals mittels des ersten Ultraschall-Sensors (21, 22, 23, 24),
c) Abfragen der zweiten Ultraschall-Sensoren (31, 32, 33, 34) des Fahrassistenzsystems (30),
d) Verifizieren des Antwortsignals als ein Fremd-Ultraschallsignal, wenn alle zweiten Ultraschall-Sensoren (31, 32, 33, 34) des Fahrassistenzsystems (30) ein Antwortsignal empfangen,
e) Verifizieren des Antwortsignals als ein bewegtes Objekt (2, 3) im toten Winkel (α), wenn nur einer der zweiten Ultraschall-Sensoren (31, 32, 33, 34) des Fahrassistenzsystems (30) ein Antwortsignal empfängt.

8. Verfahren nach Anspruch 7,
**dadurch gekennzeichnet,**
**dass** die zweiten Ultraschall-Sensoren (31, 32, 33, 34) des Fahrassistenzsystems (30) und/oder die ersten Ultraschall-Sensoren (21, 22, 23, 24) des Tote-Winkel-Überwachungssystems (20) ab einer bestimmten Fahrzeuggeschwindigkeit eingeschaltet werden, wobei insbesondere die zweiten Ultraschall-Sensoren (31, 32, 33, 34) des Fahrassistenzsystems (30) im Empfangsmodus eingeschaltet werden.

9. Verfahren nach einem der Ansprüche 7 oder 8,
**dadurch gekennzeichnet,**
**dass** aufgrund des Laufzeitunterschieds des Antwortsignals zu einem ersten Ultraschall-Sensor (21, 22, 23, 24) und zum einem benachbarten zweiten Ultraschall-Sensor (31, 32, 33, 34) des Fahrassistenzsystems (30) die Position des Objekts (2, 3) ermittelt wird.

10. Kraftfahrzeug mit einer Vorrichtung (10) nach einem der Ansprüche 1 bis 6, die durch ein Verfahren nach einem der Ansprüche 7 bis 9 betreibbar ist.
